(19) **Europäisches Patentamt**

**European Patent Office**

**Office européen des brevets**

(11) Veröffentlichungsnummer: **0 455 956 A2**

(12) # EUROPÄISCHE PATENTANMELDUNG

(21) Anmeldenummer: **91103799.2**

(51) Int. Cl.5: **A43D 119/00**

(22) Anmeldetag: **13.03.91**

(30) Priorität: **07.05.90 DE 4014472**

(43) Veröffentlichungstag der Anmeldung:
**13.11.91 Patentblatt 91/46**

(84) Benannte Vertragsstaaten:
**DE FR GB IT**

(71) Anmelder: **SCHÖN & CIE. AG**
**Im Gehörnerwald 2**
**W-6780 Pirmasens 17(DE)**

(72) Erfinder: **Jung, Klaus, Dipl.-Ing. c/o Keil &**
**Schaafhausen**
**Patentanwälte Eysseneckstrasse 31**
**W-6000 Frankfurt am Main 1(DE)**

(74) Vertreter: **Keil, Rainer A., Dipl.-Phys. Dr. et al**
**KEIL & SCHAAFHAUSEN Patentanwälte**
**Eysseneckstrasse 31**
**W-6000 Frankfurt am Main 1(DE)**

(54) **Anlage zum Herstellen von Schuhen.**

(57) Die Erfindung bezieht sich auf eine Anlage zum Herstellen von Schuhen mit einer Spitzenzwickmaschine, einer Fersen- und Seitenzwickmaschine, ggf. eine Übergabeeinrichtung für einen Leisten mit aufgezogenem spitzengezwicktem Schaft von der Spitzenzwickmaschine an die Fersen- und Seitenzwickmaschine und ggf. mit weiteren vor- oder nachgeschalteten Einrichtungen, wobei die Spitzenzwickmaschine, die Fersen- und Seitenzwickmaschine, die Übergabeeinrichtung und ggf. die weiteren Einrichtungen über eine zentrale Steuereinrichtung miteinander in Verbindung stehen. Zur Schaffung einer bedienerfreundlichen Anlage, die in einfacher Weise an sich ändernde Schuhtypen angepaßt werden kann und die einfach und schnell überwacht und gewartet werden kann, ist erfindungsgemäß vorgesehen, daß die Steuereinrichtung eine programmierbare Rechnereinheit mit Anzeigegerät, vorzugsweise einen sogenannte Personal Computer mit Bildschirm, zur Eingabe und Anzeige von Steuergrößen aufweist.

Fig.1

EP 0 455 956 A2

Die Erfindung bezieht sich auf eine Anlage zum Herstellen von Schuhen mit einer Spitzenzwickmaschine, einer Fersen- und Seitenzwickmaschine, einer Übergabeeinrichtung für einen Leisten mit aufgezogenem spitzengezwicktem Schaft von der Spitzenzwickmaschine an die Fersen- und Seitenzwickmaschine und ggf. mit weiteren vor- oder nachgeschalteten Einrichtungen, wobei die Spitzenzwickmaschine, die Fersen- und Seitenzwickmaschine, die Übergabeeinrichtung und ggf. die weiteren Einrichtungen über eine zentrale Steuereinrichtung miteinander in Verbindung stehen.

Eine derartige Anlage zum Herstellen von Schuhen ist aus der DE-OS 38 15 334 bekannt. Die dort beschriebene Schuhfertigungsanlage weist u.a. eine Spitzenzwickmaschine und eine Fersen- und Seitenzwickmaschine auf. Nach Beendigung des Spitzenzwickens wird eine Schuheinheit der Spitzenzwickmaschine entnommen und in die Fersen- und Seitenzwickmaschine von Hand eingesetzt. Zur Erhöhung der Funktionsfähigkeit der Fertigungsanlage ist diese mit einer zentralen elektronischen, programmierbaren Steuereinheit versehen, die mit den einzelnen Maschinen und Einrichtungen der Anlage in Verbindung steht. Allerdings ist es bei einer derartigen Anlage erforderlich, bei Herstellung eines anderen Schuhtyps die Steuereinheit neu zu programmieren, was sehr zeitaufwendig ist. Ein weiterer Nachteil dieser Anlage besteht darin, daß auftretende Fehlfunktionen von einer Bedienungsperson nicht rechtzeitig erkannt werden, was zu einer unnötigen Produktion von Ausschuß führen kann.

Aufgabe der Erfindung ist es, eine Anlage zum Herstellen von Schuhen der eingangs genannten Art zur Verfügung zu stellen, die in einfacher Weise bedient, hinsichtlich ihres Funktionsablaufs überwacht und schnell an wechselnde Schuhtypen angepaßt werden kann.

Diese Aufgabe wird erfindungsgemäß im wesentlichen dadurch gelöst, daß die Steuereinrichtung eine programmierbare Rechnereinheit mit Anzeigegerät, vorzugsweise einen sogenannten Personal Computer mit Bildschirm, zur Eingabe und Anzeige von Steuergrößen aufweist.

Eine derartige Anlage kann von einer einzigen Bedienungsperson bedient und überwacht werden. Die Eingabe und Einhaltung sämtlicher relevanter Steuergrößen kann einfach über den Bildschirm überwacht werden. Über vorgefertigte Programme können in einfacher Weise die entsprechenden Werte für bestimmte Schuhtypen eingegeben und anschließend auch wieder komplett abgerufen werden. Statt wie bei der bekannten Anlage erhebliche Änderungen in der Steuerung bei Variationen von Schuhmodellen vornehmen zu müssen, ist bei der erfindungsgemäßen Anlage lediglich eine Änderung in der sogenannten Sofware notwendig.

Als besonders zweckmäßig hat es sich erwiesen, daß als Steuergrößen wenigstens solche für Weglängen, Geschwindigkeiten, Zeiten, Temperaturen, Drücke, Schaltzustände von Funktionen und/oder Zugkräfte ausgewählt sind. Diese für den Verfahrensablauf der Anlage besonders wichtigen Steuergrößen können je nach Bedarf von der Bedienungsperson abgerufen und vom Anzeigegerät angezeigt werden, so daß der gesamte Herstellungsprozeß insgesamt "transparent" überwachbar ist.

Eine besonders bedienungsfreundliche Eingabe wird dadurch erreicht, daß die Steuereinrichtung eine über das Anzeigegerät darstellbare, für die Maschinen und Einrichtungen voneinander unabhängige und/oder gemeinsame Bedienerführung aufweist.

Um die Steuergrößen an verschiedenen Stellen der Maschinen und/oder Einrichtungen richtig erfassen zu können, weist die Steuereinrichtung zweckmäßigerweise Überwachungsmittel, wie Weggeber, Temperaturgeber od. dgl. auf, deren Stellwerte auf dem Anzeigegerät darstellbar sind. Die einzelnen Stellwerte können ständig auf dem Arbeitsgerät angezeigt oder von der Bedienungsperson entsprechend abgefragt werden.

Zur Anpassung der Anlage an wechselnde Schuhtypen ist die Rechnereinheit vorzugsweise hinsichtlich vorgegebener, einem bestimmten Schuhtyp zuordenbarer Wertsätze von Steuergrößen programmierbar. Hierdurch ist eine besonders schnelle Umstellung der Anlage auf wechselnde Schuhtypen möglich.

Besonders zweckmäßig ist hierbei, wenn die Wertesätze von Steuergrößen in Form von Barcodes an dem Leisten des betreffenden Schuhtyps dargestellt und in die Rechnereinheit einlesbar sind. Die Umstellung der Anlage von einem Schuhtyp auf einen anderen wird auf diese Weisevon der Rechnereinheit bereits am Barcode des neuen Leistens erkannt und selbsttätig vorgenommen. Entsprechend werden die durch den neuen Leisten erforderlichen Änderungen im Verfahrensablauf die Rechnereinheit angepaßt. Auch dieser gesamte Vorgang ist für die Bedienerperson auf dem Bildschirm ersichtlich.

Als besonders vorteilhaft erweist es sich, daß in einem Arbeitsgang die Abarbeitung der einzelnen Steuergrößen ständig über zugeordnete Geber an die Rechnereinheit zurückgemeldet wird, so daß die Bedienerperson immer über den Verfahrensablauf bei der Herstellung von Schuhen informiert ist. Aufretende Fehler können auf diese Weise schneller erkannt und behoben werden.

Eine weitere Ausgestaltung der Erfindung sieht vor, daß die Steuereinrichtung eine auf dem Anzeigegerät z.B. mittels Sensoren und/oder Schaltungen darstellbare Fehlererkennung und/oder Wartungskontrolle aufweist. Auf diese Weise kann ein genauer Wartungstermin der Anlage festgestellt und Fehler frühzeitig erkannt werden, was zu einer zuverlässigen und effektiveren Arbeitsweise der Anlage führt.

In Weiterbildung dieses Erfindungsgedankens weist die Steuereinrichtung eine bei Fehlfunktion der Anlage bzw. eines Anlageteils ein Testprogramm ausführende Schaltung auf, wodurch die Fehlfunktion am Anzeigegerät darstellbar ist. Eine derartige Schaltung bietet den Vorteil, daß die Anlage selbsttätig bei auftretenden Störungen den Fehler feststellt und dies der Bedienungsperson über das Anzeigegerät mitteilt.

Der besseren Übersichtlichkeit wegen kann der Spitzenzwickmaschine, der Fersen- und Seitenzwickmaschine, der Übergabeeinrichtung und/oder ggf. den weiteren Einrichtungen jeweils ein eigenes Anzeigegerät zugeordnet sein. Auf diesen Anzeigegeräten können auch solche Werte angezeigt werden, die unmittelbar im Bedienbereich der Anlage benötigt werden.

Um die Schalt- und Steuerelemente der einzelnen Maschinen und Einrichtungen räumlich zusammenzufassen, was insbesondere für Reparaturen und Wartungen von Vorteil ist, weist die Steuereinrichtung einen Schalt- oder Steuerschrank für die Aufnahme der Schalt- und Steuerelemente auf.

Die Rechnereinheit mit Anzeigegerät kann bspw. im Falle einer Beschädigung besonders einfach durch eine neue ausgetauscht werden, wenn sie dem Steuerschrank vorgeschaltet ist. Im übrigen können auch bekannte Anlagen zum Herstellen von Schuhen erfindungsgemäß auf diese Weise einfach nachgerüstet werden.

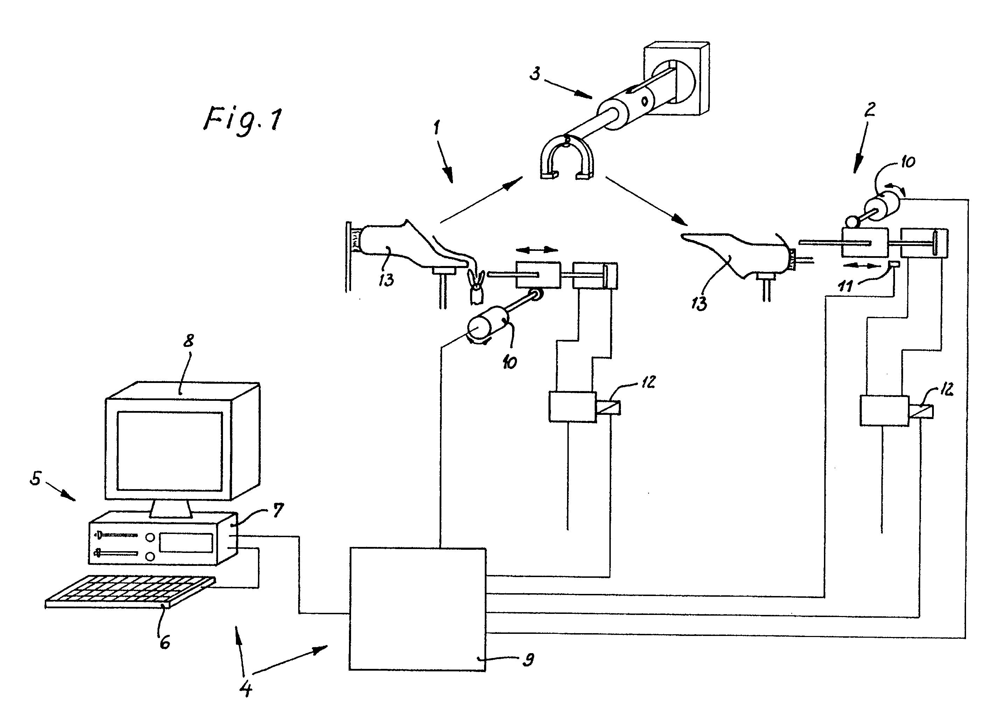

Weitere Ziele, Vorteile, Merkmale und Anwendungsmöglichkeiten der vorliegenden Erfindung ergeben sich aus der nachfolgenden Beschreibung eines Ausführungsbeispiels anhand der Zeichnung. Dabei bilden alle beschriebenen und/oder bildlich dargestellten Merkmale für sich oder in beliebiger sinnvoller Kombination den Gegenstand der Erfindung, auch unabhängig von ihrer Zusammenfassung in den Ansprüchen oder deren Rückbeziehung.

Die einzige Figur zeigt eine schematische Darstellung einer erfindungsgemäßen Anlage mit programmierbarer Rechnereinheit und Anzeigegerät.

Die erfindungsgemäße Anlage zum Herstellen von Schuhen weist in diesem Ausführungsbeispiel eine Spitzenzwickmaschine 1, eine Fersen- und Seitenzwickmaschine 2 sowie eine Übergabeeinrichtung 3 auf. Bei der Übergabeeinrichtung 3 kann es sich um einen Übergaberoboter handeln.

Desweiteren ist die Anlage mit einer Steuereinrichtung 4 ausgestattet, die eine Rechnereinheit 5 und einen Schalt- und Steuerschrank 9 aufweist. Die Rechnereinheit 5, die im dargestellten Ausführungsbeispiel als sogenannter Personal Computer ausgebildet ist, weist eine Tastatur 6, eine den eigentlichen Rechner enthaltende Zentraleinheit 7 und ein mit Bildschirm ausgebildetes Anzeigegerät 8 auf. Im Schalt- oder Steuerschrank 9 sind Schalt- und Steuerelemente aufgenommen. Der Schalt- oder Steuerschrank 9 steht in dem dargestellten Fall mit einem Weggeber 10 der Spitzenzwickmaschine 1, andererseits mit einem Sensor 11 der Fersen- und Seitenzwickmaschine 2 in Verbindung. Weggeber 10 und Sensor 11 sind jedoch nur beispielhaft als Überwachungsmittel genannt. Weiterhin steht der Schalt- und Steuerschrank 9 mit der Spitzenzwickmaschine 1 und der Fersen- und Seitenzwickmaschine 2 vorgeschaltete Steuerventile 12 in Verbindung.

Über die Rechnereinheit 5 mit Anzeigegerät 8 werden sämtliche variable Steuergrößen eingegeben und angezeigt. Bei den Steuergrößen handelt es sich um Weglängen, die bspw. über den Weggeber 10 gemessen werden, Geschwindigkeiten, Zeiten, Temperaturen, Drücke, Schaltzustände von bestimmten Funktionen sowie

Zugkräfte der Zangen, also auch solche, die nicht bei allen Betriebsarten benötigt werden. Die Eingabe der Steuergrößen in die Rechnereinheit 5 erfolgt über eine Bedienerführung und wird über das Anzeigegerät 8 angezeigt. Eingegebene Werte werden bspw. über den Weggeber 10 und den Sensor 11 sowie über nicht dargestellte Temperaturgeber od. dgl. überwacht und können am Anzeigegerät 8 ständig abgerufen werden. Mit vorgefertigten Programmen, die ebenfalls mit Bedienerführung arbeiten können, können zum Teil andere Werte für andere Schuhtypen eingegeben und am Anzeigegerät 8 abgerufen werden. Die Steuergrößen und Befehle aus der Rechnereinheit 5 werden an den Schalt- oder Steuerschrank 9 übergeben, der eine elektrische und/oder elektronische Schaltung aufweist. Die Logik kann ganz in einem Speicher der Rechnereinheit festgehalten sein, zum Teil aber auch, wenn dies bspw. aus Platzgründen erforderlich ist, im Schalt- oder Steuerschrank 9. Über die entsprechenden Geber und Sensoren gemessene Wertesätze von Steuergrößen werden ständig der Steuereinrichtung 4, d.h. zunächst dem Schalt- und Steuerschrank 9 und anschließend über die Rechnereinheit 5 dem Anzeigegerät 8 zugeführt.

Zusätzlich sind Wertsätze von Steuergrößen in Form von Barcodes an einem Leisten 13 eines bestimmten Schuhtyps dargestellt und in die Rechnereinheit 5 einlesbar.

Desweiteren ist die Steuereinrichtung 4 mit einer Fehlererkennung und/oder einer Wartungskontrolle versehen, welche am Anzeigegerät 8 eingesehen werden kann. Hierzu sind entsprechende anhand des Sensors 11 beispielhaft dargestellte Sensoren und/oder Schaltungen so ausgeführt, daß bei Fehlfunktionen eines Teils der Anlage ein Testprogramm abläuft, welches den Fehler feststellt und die Fehlfunktion am Anzeigegerät 8 darstellt. Gleichzeitig kann auch der gesamte Verfahrensgang am Bildschirm dargestellt werden. Auftretende Fehler, bspw. wenn ein Ventil nicht schaltet oder ein Weg nicht gefahren wird, können sofort, oder auf Abruf abgelesen werden. Die Anlage ist derart ausgeführt, daß in einem Arbeitsgang die Abarbeitung der einzelnen Steuergrößen ständig über zugeordnete Geber an die Rechnereinheit 5 zurückgemeldet wird.

In einer nicht dargestellten Ausführungsform der Erfindung sind die Spitzenzwickmaschine 1, die Fersen- und Seitenzwick maschine 2 und ggf. auch die Übergabeeinrichtung 3 mit separaten Bildschirmen ausgestattet, die insbesondere solche Werte anzeigen, die unmittelbar am jeweiligen Bedienungsbereich benötigt werden.

Bezugszeichenliste:

| 1 | Spitzenzwickmaschine |
| 2 | Fersen- und Seitenzwickmaschine |
| 3 | Übergabeeinrichtung |
| 4 | Steuereinrichtung |
| 5 | Rechnereinheit |
| 6 | Tastatur |
| 7 | Zentraleinheit |
| 8 | Anzeigegerät |
| 9 | Steuerschrank |
| 10 | Weggeber |
| 11 | Sensor |
| 12 | Steuerventil |
| 13 | Leisten |

**Patentansprüche**

1. Anlage zum Herstellen von Schuhen mit einer Spitsenswickmaschine (1), einer Fersen- und Seitenzwickmaschine (2), einer Übergabeeinrichtung (3) für einen Leisten (13) mit aufgezogenem spitzengezwicktem Schaft von der Zwickmaschine (1) an die Fersen- und Seitenzwickmaschine (2) und ggf. mit weiteren vor- oder nachgeschalteten Einrichtungen, wobei die Spitzenzwickmaschine (1), die Fersen- und Seitenzwickmaschine (2), die Übergabeeinrichtung (3) und ggf. die weiteren Einrichtungen über eine zentrale Steuereinrichtung (4) miteinander in Verbindung stehen, dadurch gekennzeichnet, daß die Steuereinrichtung (4) eine programmierbare Rechnereinheit (5) mit Anzeigegerät (8), vorzugsweise einen sogenannten Personal Computer mit Bildschirm, zur Eingabe und Anzeige von Steuergrößen aufweist.

2. Anlage nach Anspruch 1, dadurch gekennzeichnet, daß als Steuergrößen wenigstens solche für Weglängen, Geschwindigkeiten, Zeiten, Temperaturen, Drücke, Schaltzustände von Funktionen und/oder Zugkräfte ausgewählt sind.

3. Anlage nach Anspruch 1 oder 2, dadurch gekennzeichnet, daß die Steuereinrichtung (4) eine über das Anzeigegerät (8) darstellbare, für die Maschinen und Einrichtungen voneinander unabhängige und/oder gemeinsame Bedienerführung aufweist.

4. Anlage nach einem der Ansprüche 1 bis 3, dadurch gekennzeichnet, daß die Steuereinrichtung (4) Überwachungsmittel, wie Weggeber (10), Temperaturgeber od. dgl., aufweist, deren Stellwerte auf dem Anzeigegerät (8) darstellbar sind.

5. Anlage nach Anspruch 4, dadurch gekennzeichnet, daß die Rechnereinheit (5) hinsichtlich vorgegebener, einem bestimmten Schuhtyp zuordenbarer Wertesätze von Steuergrößen programmierbar ist.

6. Anlage nach Anspruch 5, dadurch gekennzeichnet, daß die Wertesätze von Steuergrößen in Form von Barcodes an dem Leisten (13) des betreffenden Schuhtyps dargestellt und in die Rechnereinheit (5) einlesbar sind.

7. Anlage nach einem der Ansprüche 1 bis 6, dadurch gekennzeichnet, daß in einem Arbeitsgang die Abarbeitung der einzelnen Steuergrößen ständig über zugeordnete Geber an die Rechnereinheit (5) zurückgemeldet wird.

8. Anlage nach einem der Ansprüche 1 bis 7, dadurch gekennzeichnet, daß die Steuereinwirkung (4) eine auf dem Anzeigegerät (8) z.B. mittels Sensoren und/oder Schaltungen darstellbare Fehlererkennung und/oder Wartungskontrolle aufweist.

9. Anlage nach einem der Ansprüche 1 bis 8, dadurch gekennzeichnet, daß die Steuereinrichtung (4) eine bei Fehlfunktion der Anlage bzw. eines Anlagenteils ein Testprogramm ausführende Schaltung aufweist, wodurch die Fehlfunktion am Anzeigegerät (8) darstellbar ist.

10. Anlage nach einem der Ansprüche 1 bis 9, dadurch gekennzeichnet, daß der Spitzenzwickmaschine (1), der Fersen- und Seitenzwickmaschine (2), der Übergabeeinrichtung (3) und/oder den ggf. weiteren Einrichtungen jeweils ein eigenes Anzeigegerät (8) zugeordnet ist.

11. Anlage nach einem der Ansprüche 1 bis 10, dadurch gekennzeichnet, daß die Steuereinrichtung (4) einen Schalt- oder Steuerschrank (9) für die Aufnahme von Schalt- und Steuerelementen aufweist.

12. Anlage nach Anspruch 11, dadurch gekennzeichnet, daß die Rechnereinheit (5) mit Anzeigegerät (8) dem Steuerschrank (9) vorgeschaltet ist.

Fig.1